# EUROPEAN PATENT SPECIFICATION

(11) **EP 0 581 519 B1**
(45) Date of publication and mention of the grant of the patent: **27.05.1998**
(21) Application number: 93305753.1
(22) Date of filing: 21.07.1993
(51) Int. Cl.: G11B 7/12, G11B 7/13, G11B 7/135, G02B 5/32

(54) **Optical pick-up apparatus**
Optisches Wiedergabegerät
Appareil de reproduction optique

(30) Priority: 30.07.1992 JP 203345/92; 30.07.1992 JP 203346/92; 18.08.1992 JP 218948/92
(43) Date of publication of application: 02.02.1994
(73) Proprietor: MATSUSHITA ELECTRIC INDUSTRIAL CO., LTD., Kadoma-shi, Osaka-fu, 571 (JP)
(72) Inventor: Horinouchi, Syougo, Fukuoka (JP)
(74) Representative: Senior, Alan Murray

(56) References cited:
- EP-A- 0 195 657
- EP-A- 0 278 406
- EP-A- 0 467 303
- EP-A- 0 469 552
- US-A- 5 122 903
- PATENT ABSTRACTS OF JAPAN vol. 13, no. 57 (P-825) 9 February 1989 & JP-A-63 247 925
- PATENT ABSTRACTS OF JAPAN vol. 12, no. 86 (P-677) 18 March 1988 & JP-A-62 219 341
- PATENT ABSTRACTS OF JAPAN vol. 13, no. 424 (P-934) 21 September 1989 & JP-A-01 155 529

## Description

The present invention relates to an optical pick-up apparatus, which is used to record information into an optical disk and to reproduce the recorded information from the same.

An optical pick-up apparatus associated with an optical disk device utilizes a laser beam for record and reproduction of information. In order to realize the reduction of size and weight in such an optical pick-up apparatus, a plurality of holographic optical elements have been conventionally used. And, there is known a method of reflecting a laser beam several times in a light guide. For instance, the Japanese Unexamined Patent Applications Nos. 146444/1987 and 155529/1989 disclose a long and thin light guide made of transparent substance. In this light guide, a going laser beam is reflected several times and reaches an optical disk passing through a holographic optical element. The optical disk memorizes information on the surface thereof in the form of unit of spots or depressions. A returning laser beam reflected at the recording surface of the optical disk is again reflected several times in the light guide but is guided via a different path to an photo detector. The Japanese Unexamined Patent Application No. 20737/1988 discloses two holographic optical elements. One converges a going laser beam onto an optical disk and the other converges a returning laser beam reflected at the optical disk to a photo detector.

Furthermore, the Japanese Unexamined Patent Applications Nos. 81335/1990 and 220145/1989 disclose holographic optical elements integrally assembled with objective lenses used for causing diffraction in a returning beam after being reflected at an optical disk.

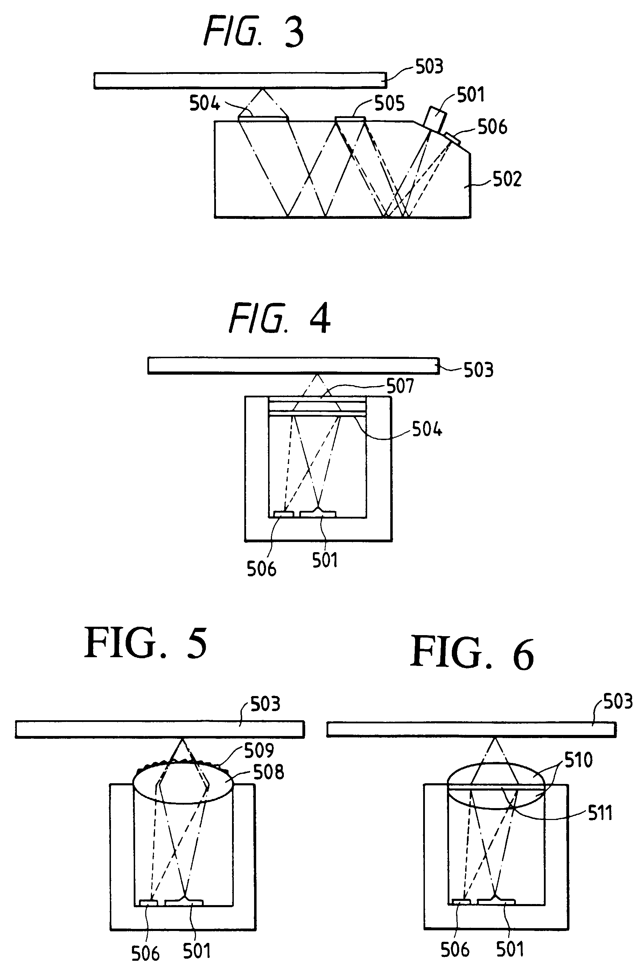

Hereinafter, above-introduced conventional optical pick-up apparatus equipped with holographic optical elements will be explained in more detail with reference to Figs. 3 to 6. Fig. 3 shows an optical pick-up apparatus utilizing a plurality of reflections of a laser beam, as represented by the Japanese Unexamined Patent Applications Nos. 146444/1987 and 155529/1989. Fig. 4 shows an optical pick-up apparatus including a pair of holographic optical elements, one holographic optical element converging a going laser beam and the other holographic optical element causing diffraction of a returning laser beam, which is similar to that disclosed in the Japanese Unexamined Patent Application No. 20737/1988. Fig. 5 shows an optical pick-up apparatus using an objective lens on the spherical surface of which a holographic optical element is integrally or directly formed to cause diffraction of a laser beam, the same type as that disclosed by the Japanese Unexamined Patent Application No. 81335/1990. Fig. 6 shows an optical pick-up apparatus using a complex objective lens whose body is split into two by a plane normal to an axis thereof. A holographic optical element for diffraction is sandwiched therebetween, as is disclosed in the Japanese Unexamined Patent Application No. 220145/1989.

In Fig. 3 a reference numeral 501 represents a laser diode emitting a laser beam. A reference numeral 504 represents a holographic optical element converging the laser beam emitted from the laser diode 501 onto an optical disk 503 whose surface are formed with the unit of spots memorizing information being sensed by the laser beam. A reference numeral 502 represents a light guide which is made of a transparent substance such as fused silica and causes a laser beam to reflect repeatedly at inside, upper and lower, surfaces thereof. A reference numeral 505 represents a holographic optical element of reflection type which reflects a returning laser beam having once reached and been reflected at the surface of the optical disk 503 and also diffracts this returning laser beam toward a photo detector 506.

In Fig. 4 a reference numeral 507 represents a holographic optical element of transmission type which transmits a returning laser beam having been reflected at the surface of the optical disk 503 and also diffracts this returning laser beam toward the photo detector 506.

In Fig. 5 a reference numeral 508 represents an objective lens converging a laser beam emitted from the laser diode 501 onto the optical disk 503. A reference numeral 509 represents a holographic optical element of transmission type which transmits a returning laser beam having been reflected at the surface of the optical disk 503 and also diffracts this returning laser beam toward the photo detector 506. The laser diode 501, the optical disk 503, and the photo detector 506 are substantially the same as those explained with reference to Fig. 3.

In Fig. 6, a reference numeral 510 represents a complex objective lens whose body is split by a plane normal to an axis thereof into two, upper and lower, half bodies. This complex objective lens 510 converges a laser beam emitted from the laser diode 501 onto the surface of the optical disk 503. A reference numeral 511 represents a holographic optical element of transmission type which transmits a returning laser beam having been reflected at the surface of the optical disk 503 and also diffracts this returning laser beam toward the photo detector 506. This holographic optical element 511 is sandwiched by and integrally fabricated with the paired half bodies of the complex objective lens 510. The laser diode 501, the optical disk 503, and the photo detector 506 are substantially the same as those explained with reference to Fig. 3.

Operations on above introduced conventional optical pick-up apparatus will be explained below.

In Fig. 3, a laser beam is emitted from the laser diode 501 and, then, reflected plural times at inside, upper and lower, surfaces of the light guide 502 so as to reach the holographic optical element 504. The holographic optical element 504 then converges the laser beam thus guided through the light guide 502 onto the surface of the optical disk 503. The laser beam is reflected at the surface, i.e. a recording surface, of the optical disk 503 and returns as a beam including information read out from the optical disk 503. The returning beam passes through the holographic optical element 504 again and, in turn, reaches the holographic optical element 505 of reflection type. This holographic optical element 505 not only reflects the returning laser beam but diffracts it toward the photo detector 506. The photo detector 506 receives the returning laser beam and detects focusing error and tracking error, as well as the read-out information.

The optical pick-up apparatus shown in Figs. 4, 5 and 6 operate in the same manner as that shown in Fig. 3. A laser beam emitted from the laser diode 501 is converged onto the recording surface of the optical disk 503 passing through the holographic optical element 504, the objective lens 508, or the split-type complex objective lens 510, respectively. After having been reflected, the returning beam comprising information read out from the optical disk 503 passes through the holographic optical elements 507, 509, or 511 respectively and is diffracted toward the photo detector 506. The photo detector 506 receives the returning laser beam and detects focusing error and tracking error, as well as the read-out information.

These prior art constructions of the optical pick-up apparatus are, however, disadvantageous in complicateness of adjusting positional relationship between individual optical components. One reason of requiring complicated positional adjustment of the optical components is that the conversing arrangement and the diffracting arrangement are independent from each other. In more detail, the conversing arrangement conversing a laser beam is constituted by the holographic optical element 504, the objective lens 508, or the split-type objective lens 510. On the other hand, the diffracting arrangement diffracting the laser beam is constituted by the reflection-type holographic optical element 505 or the transmission-type holographic optical element 507, 509, 511. These conversing arrangement and the diffracting arrangement are independently mounted on the light guide 502 or installed into a casing. Therefore, it was inevitable to take a long time in an installation or fabrication of the pick-up apparatus because of not only positional adjustment of individual optical components but mutual adjustment of positional relationship between the conversing construction and the diffracting construction. This complicateness in the manufacturing process results in increase of production cost.

Furthermore, in case of the optical pick-up apparatus shown in Fig. 5, the constructional requirement of forming the transmission-type holographic optical element 509 directly on the objective lens 508 further increases the complicateness. This will be easily understood from the spherical surface of the objective lens 508 which makes the formation of the transmission-type holographic optical element 509 thereon difficult. Still further, in case of the optical pick-up apparatus shown in Fig. 6, the structure of sandwiching the transmission-type holographic optical lens 511 between the split half bodies of the complex objective lenses 510 is not only time-consuming in its assembling but tends to cause unacceptable deterioration in lens property.

EP-A-0,467,303 discloses an optical head apparatus according to the preamble of claim 1.

Accordingly, the present invention has a purpose, in view of above-described problems or disadvantages encountered in the prior art, to provide an optical pick-up apparatus capable of realizing both the conversion of a laser beam to the optical disk and/or the photo detector and the differentiation of going and returning laser beam paths, by use of only one holographic optical element, thereby providing cheaper optical pick-up apparatus.

The present invention provides an optical pick-up apparatus comprising:
a light emitting element for emitting polarized light onto an optical disk;
a photo detector for receiving the light reflected from said optical disk;
a transparent light guide having two surfaces, a first surface of which confronts with said optical disk and a second surface of which confronts with said light emitting element and said photo detector, for guiding the light emitted from said light emitting element onto said optical disk and also for guiding the light reflected from the optical disk toward said photo detector; and
a first hologram pattern for converging the light emitted from the light emitting element onto the optical disk and a second hologram pattern for diffracting the light reflected by the optical disk toward said photo detector; characterised in that:
said first and second hologram patterns are superposed to form a compound holographic optical element provided on said first surface; that
said second hologram pattern is arranged for changing the light reflected by the optical disk into focusing light, and that
a phase difference control film is provided on said light guide, for controlling a phase difference between polarized components of the light emitted from said light emitting element.

The above and other features and advantages of the present invention will become more apparent from the following detailed description of an exemplary embodiment and the accompanying drawings, in which:
Fig. 1(a) is a plane view showing an optical pick-up apparatus in accordance with an embodiment of the present invention;
Fig. 1(b) is a sectional view showing the optical pick-up apparatus in accordance with the embodiment, taken along the line X-X of Fig. 1(a);
Fig. 1(c) is an enlarged view showing a semiconductor laser chip and a reflection prism constituting a part of the optical pick-up apparatus in accordance with the embodiment;
Fig. 2(a) is a view showing a hologram pattern of the embodiment of the present invention, which is constituted by superposing a first hologram pattern and a second hologram pattern;
Fig. 2(b) is a view solely showing the first hologram pattern of the embodiment;
Fig. 2(c) is a view solely showing the second hologram pattern of the embodiment;
Fig. 3 is a view showing a conventional optical pick-up apparatus utilizing a plurality of reflections of a laser beam in a light guide;
Fig. 4 is a view showing another conventional optical pick-up apparatus including a pair of holographic optical elements, one holographic optical element converging a going laser beam and the other holographic optical element causing diffraction of a returning laser beam;
Fig. 5 is a view showing still another optical pick-up apparatus using an objective lens on the spherical surface of which a holographic optical element is integrally or directly formed to cause diffraction of a laser beam; and
Fig. 6 is a view showing yet another optical pick-up apparatus using a complex objective lens whose body is split into two by a plane normal to an axis thereof and a holographic optical element for diffraction is sandwiched therebetween.

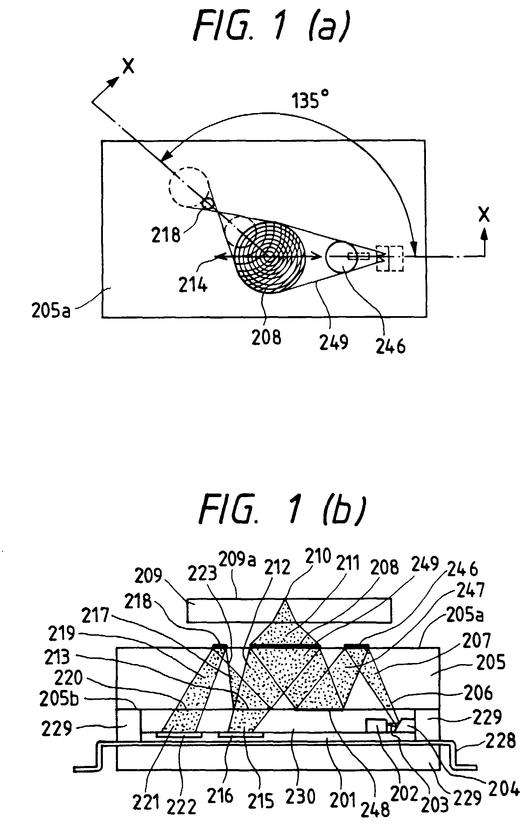

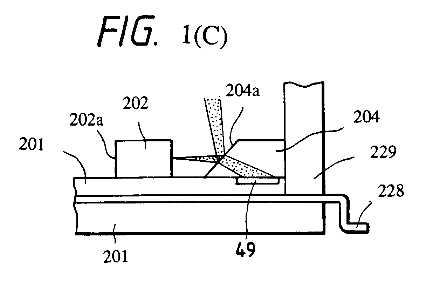

Hereinafter, an embodiment of the present invention will be explained with reference to Figs. 1(a) through 2(c). Fig. 1(a) is a plane view of an optical pick-up apparatus in accordance with the embodiment of the present invention, and Fig. 1(b) is a sectional view showing the optical pick-up apparatus in accordance with the embodiment, taken along a line X-X of Fig. 1(a).

First of all a going optical path, starting from a semiconductor laser serving as a light emitting element and arriving at an optical disk, will be explained below. In Fig. 1(b), a semiconductor laser chip 202 is mounted in parallel with and on a sensor substrate 201. A laser beam 203, emitted horizontally from the semiconductor laser chip 202 reaches a reflection prism 204 mounted on the sensor substrate 201. This reflection prism 204, being trapezoidal shape, has a reflection surface confronting with the light emitting surface of the semiconductor laser chip 202. A positional relationship between this reflection prism 204 and the semiconductor laser chip 202 is adjusted in such a manner that the reflection surface of the reflection prism 204 confronts with the light emitting surface of the semiconductor laser chip 202 so that a laser beam reflected at the reflection surface of the reflection prism 204 goes upward. The laser beam, having reached the reflection prism 204, is reflected at the reflection surface and enters obliquely as a diffusing or diverging beam 207 into the inside of a transparent light guide 205 through an incident window 206 formed on a second, i.e. a lower, surface 205b thereof.

Fig. 1(c) is an enlarged view showing the semiconductor laser chip 202 and the reflection prism 204 shown in Fig. 1(b). The reflection prism 204 has a cross section of a trapezoidal shape. The reflection surface 204(c) of the reflection prism 204 is coated by a semi-transmission type film which transmits a part of the laser beam emitted from the semiconductor laser chip 202 into an inside of the reflection prism 204 without being reflected by the reflection surface 204(a). There is formed a monitor sensor 49 on the upper surface of the sensor substrate 201 so as to face the bottom of the reflection prism 204. This monitor sensor 49 receives the laser beam transmitted into the inside of the reflection prism 204 and, then, detects change of light quantity of the semiconductor laser chip 204 and feeds the detected result back to a control circuit.

This arrangement of the monitor sensor 49 with associated reflection prism 204 is unique and advantageous compared with the conventional ones. Because, this kind of monitor sensor has been conventionally located behind the semiconductor laser chip 202, in order to sense a laser beam emitted from a rear surface 202(c) of the semiconductor laser chip 202. The behind side of the semiconductor laser chip 202 is, however, normally located other photo detectors, e.g. the first and second photo detectors 216 and 222. Therefore, nevertheless its intention, the laser beam emitted toward the monitor sensor tends to cause stray light to these other photo detectors.

On the contrary, the present invention enables the reflection prism 204 to partly transmit the laser beam toward the monitor sensor 49 disposed beneath the reflection prism 204. In other words, the present invention no longer emits the laser means from the rear surface 202(c) of the semiconductor laser chip 202 and therefore no stray light disturbs other photo detectors located behind the semiconductor laser chip 202.

The light guide 205 is spaced from the semiconductor laser chip 202 and photo detectors 216, 222 later described. The light guide 205 has a first, i.e. an upper, surface 205a, disposed in parallel with the second surface 205b. The first surface 205a confronts with an optical disk 209 located above the light guide 205. On the first surface 205a there is provided a first reflection portion 246, which reflects the diffusion beam 207 and changes it into the reflection beam 247 proceeding toward the second surface 205b. On the second surface 205b there is provided a second reflection portion 248, which reflects the reflection beam 247 and changes it into the reflection beam 249 proceeding toward the first surface 205a. The laser beam, entered from the incident window 206, is reflected two times in the light guide 205 by the first and second reflection portions 246, 248 and, in turn, reaches a compound holographic optical element 208 formed in the vicinity of the first reflection portion 246 on the first surface 205a.

When the laser beam is reflected at the first and second reflection portions 246, 248, the polarization state of the laser beam is normally changed upon each reflection. For example, the laser beam, entered as a linearly polarized beam, may be changed into an elliptic polarized beam after the reflection. In reading out the magneto-optical recording information from the optical disk 209, it is mandatory to detect a slight Kerr rotation angle caused by the linearly polarized beam irradiated onto the optical disk 209. Hence, it is very important to accurately keep the state of the linearly polarized beam until it reaches the optical disk 209. In order to prevent the linearly polarization beam from being changed into an elliptic shape upon the reflection, there is provided a phase difference control film which is capable of controlling the phase difference between the first and second reflection portions 246, 248.

This phase difference control film is, for example, constituted as follows.

It is now supposed that an optical film thickness is expressed by nd, wherein d represents a thickness of the film and n represents a refraction factor. An L-layer is made of SiO₂ (nd=207nm, n=1.45). An H-layer is made of TiO₂ (nd=199nm, n=2.30). An incident angle of a light is 18.35° with respect to the normal of a plane. The construction of the phase difference control film is given as a lamination layer consisting of air · L-layer · (L-layer · H-layer)¹¹. Here, a meaning of the expression (L-layer · H-layer)¹¹ is that a combined layer of (L-layer · H-layer) is repeatedly laminated as much as 11 times.

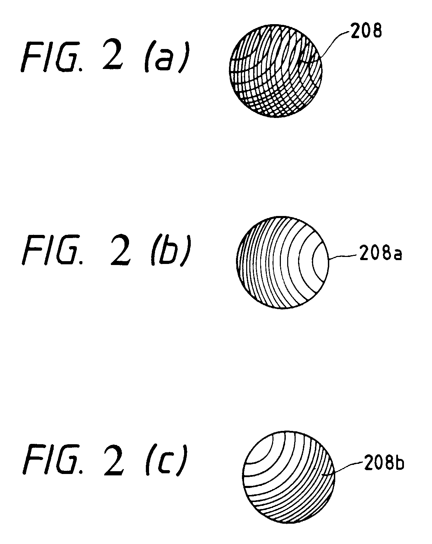

The compound holographic optical element 208 has a compound hologram pattern shown in Fig. 2 (a), which is the superposition of two hologram patterns shown in Figs. 2 (b) and 2 c). One hologram pattern, shown in Fig. 2 (b), has eccentric circles pattern, in which a center of these concentric circles positions right of the hologram pattern as shown in the drawing. This hologram pattern serves as a first hologram pattern 208a capable of focusing the diffused laser beam 249 onto an information recording layer 209a of the optical disk 209 as a spot 210 of a focusing beam 211. Namely, the laser beam 203 emitted from the semiconductor laser chip 202 passes through the transparent light guide 205, diffusing obliquely with respect to the first and second surfaces 205a, 205b thereof and, in turn, passes through the compound holographic optical element 208 disposed on the first surface 205a. Then, the laser beam is converged along the axis normal to the first surface 205a of the light guide 205 onto the information recording layer 209a of the optical disk 209.

The other hologram pattern, shown in Fig. 2 (c), has eccentric circles pattern, whose center is offset upper and left in the drawing, which is different from that of the above-described first hologram pattern. This hologram pattern serves as a second hologram pattern 208b capable of converting the laser beam, being reflected at the spot 210 and returning the same optical path as the going laser beam, into a returning focusing beam 212, and also capable of diffracting this returning focusing beam 212 toward the second surface 205b with a predetermined incident angle.

A returning optical path, starting from the optical disk 209, will be explained below. The second surface 205b of the light guide 205 is formed with a polarized beam splitter 213. The polarized beam splitter 213 includes a polarized beam splitting film coated thereon, which can transmits P-polarized component and reflects S-polarized component of the returning focusing beam 212.

It is now assumed that an arrow, shown in Fig. 1 (a), represents a linearly polarized beam 214, which expresses the polarization state of the reflection beam 249 entered into the compound holographic optical element 208. The second hologram pattern 208b is designed in such a manner that the diffracted direction of the returning focusing beam 212 is inclined 135° with respect to the polarization direction of the linearly polarized beam 214. Accordingly, the diffracted returning focusing beam 212 includes both P-polarized component and S-polarized component evenly, i.e. at a ratio of approximately 50 : 50. Approximately half of the diffracted returning focusing beam 212 transmits the polarized beam splitter 213; therefore, light quantity of the transmission beam 215, having transmitted through the polarized beam splitter 213, is reduce to 50%. This transmission beam 215 is received by a first photo detector 216 provided on an upper surface of the sensor substrate 201. The remainder of the returning focusing beam 212, after having been reflected at the polarized beam splitter 213, proceeds toward the first surface 205a as a reflection beam 217. A reflection portion 218, formed on the first surface 205a, reflects this beam 217 so as to convert it into a reflection beam 219 proceeding toward the second surface 205b. The reflection beam 219, in turn, goes through a transmission window 220 formed on the second surface 205b and, subsequently, becomes a transmission beam 221. This transmission beam 221 is received by a second photo detector 222. The compound holographic optical element 208 and others are designed to let a focal point 223 of the diffracted returning focusing beam 212 reside on an optical path between the polarized beam splitter 213 and the second photo detector 222.

As is apparent from the foregoing description, the present invention utilizes the reflections occurring inside the optical guide 205 to guide the laser beam 203 emitted from the semiconductor laser chip 202 to the compound holographic optical element 208. As a result, it becomes possible to use the light guide 205 having a thin width compared with the optical path of the laser beam 203. Hence, the optical pick-up apparatus can be made small in size. Furthermore, the phase difference control film, provided on the reflection surface, surely prevents the linearly polarized beam from being changed into the elliptic polarized beam upon the reflection.

Although the diffraction direction of the returning focusing beam 212 is inclined 135° with respect to the polarization direction of the linearly polarized beam 214 in this embodiment, the inclined angle can be any of 45°, 135°, 225°, and 315°, i.e. an angle of (2n+1)π/4 (n: integer).

## Claims

1. An optical pick-up apparatus comprising:
a light emitting element (202) for emitting polarized light onto an optical disk (209);
a photo detector (216, 222) for receiving the light reflected from said optical disk;
a transparent light guide (205) having two surfaces, a first surface (205a) of which confronts with said optical disk and a second surface (205b) of which confronts with said light emitting element and said photo detector, for guiding the light emitted from said light emitting element onto said optical disk and also for guiding the light reflected from the optical disk toward said photo detector; and
a first hologram pattern (208a) for converging the light emitted from the light emitting element onto the optical disk and a second hologram pattern (208b) for diffracting the light reflected by the optical disk toward said photo detector; characterised in that:
said first and second hologram patterns are superposed to form a compound holographic optical element (208) provided on said first surface; that
said second hologram pattern is arranged for changing the light reflected by the optical disk into focusing light, and that
a phase difference control film is provided on said light guide, for controlling a phase difference between polarized components of the light emitted from said light emitting element.

2. An optical pick-up apparatus according to claim 1, wherein all the second surface of the light guide except for light reflection and light transmitting regions is coated by a light shielding film.

3. An optical pick-up apparatus according to claim 1 and 2, wherein said light emitting element (202) and photo detector (216, 222) are spaced from said light guide.

4. An optical pick-up apparatus according to claim 3, further comprising an incident light reflection member (204) for reflecting the light emitted from said light emitting element (202) toward said light guide (205) so as to lead it into the light guide.

5. An optical pick-up apparatus according to claim 4, wherein said light emitting element (202) and said incident light reflection member (204) are disposed on a sensor substrate (201) on which said photo detector (216, 222) is provided.

6. An optical pick-up apparatus according to claim 5, wherein said incident light reflection member (204) comprising a trapezoidal prism having an inclined reflection surface (204a) on which semi-transmission film is coated, for reflecting the light emitted from said light emitting element (202) toward said light guide (205) so as to lead it into the light guide;
the apparatus further comprising a light quantity monitor sensor (4a) formed on said sensor substrate (201) at a region with which a bottom of said prism contacts, thereby transmitting a part of the light emitted from said light emitting element into said trapezoidal prism to detect light quantity by said light quantity monitor sensor.

7. An optical pick-up apparatus according to any one of claims 1 to 6, wherein:
said photo detector comprises first and second photo detectors (216, 222) and further comprising:
a semi-transmission portion (213), provided on said second surface, for transmitting a part of the light having been reflected at the optical disk and passed through said holographic optical element and for reflecting the remainder of said light;
a reflection portion (218), provided on said first surface, for receiving said remainder of said light reflected by said semi-transmission portion and reflecting it toward said second photo detector;
a focal point of said light having been reflected at the optical disk and passed through said holographic optical element residing on an optical path between said semi-transmission portion (213) and said second photo detector (222); and
said first and second photo detectors detecting focusing error and tracking error as well as information recorded on the optical disk.

8. An optical pick-up apparatus according to claim 7, wherein:
said light emitting element (202) is adapted to emit linearly polarized light;
said second hologram pattern (208b) is adapted to diffracting the light having been reflected at the optical disk in a direction inclined at an angle of (2n+1) π/4, wherein n is an integer, with respect to a polarization direction of said linearly polarized light, and wherein said semi-transmission portion (213) comprises a polarizing beam splitter, provided on said second surface, for transmitting either one of P-polarized component and S-polarized component of the light having been reflected at the optical disk and passed through said holographic optical element and for reflecting the other of said P-polarized component and S-polarized component.

9. An optical pick-up apparatus according to claim 8, further comprising:
a transmission window (220), provided on said second surface, for guiding said light reflected at said reflection portion toward said second photo detector.

10. An optical pick-up apparatus in accordance with claim 9, wherein the linearly polarized beam of said light emitted from said light emitting element is S-polarized component with respect to the second surface of said light guide, and said polarized beam splitting film coated on said second surface and said polarized beam splitter transmit the P-polarized component and reflect the S-polarized component.

## Patentansprüche

1. Optische Aufnehmervorrichtung mit:
einem Licht ausstrahlenden Element (202) zum Ausstrahlen von polarisiertem Licht auf eine optische Platte (209);
einer Photodetektoreinrichtung (216, 222) zum Empfangen des von der optischen Platte reflektierten Lichts;
einer transparenten Lichtführung (205) mit zwei Oberflächen, wobei deren erste Oberfläche (205a) der optischen Platte zugewandt ist und deren zweite Oberfläche (205b) dem Licht ausstrahlenden Element und der Photodetektoreinrichtung zugewandt ist, zum Führen des von dem Licht ausstrahlenden Element ausgestrahlten Lichts auf die optische Platte und ebenfalls zum Führen des von der optischen Platte reflektierten Lichts zu der Photodetektoreinrichtung; und
einem ersten holographischen Muster (208a) zum Konvergieren des von dem Licht ausstrahlenden Element ausgestrahlten Lichts auf die optische Platte und einem zweiten holographischen Muster (208b) zum Beugen des von der optischen Platte reflektierten Lichts zu der Photodetektoreinrichtung;
**dadurch gekennzeichnet, daß**
das erste und zweite holographische Muster überlagert sind, um ein holographisches optisches Verbundelement (208) auszubilden, das sich auf der ersten Oberfläche befindet;
das zweite holographische Muster derart beschaffen ist, daß von der optischen Platte reflektiertes Licht in Fokussierlicht verändert wird; und
zur Steuerung einer Phasendifferenz zwischen polarisierten Komponenten des von dem Licht ausstrahlenden Element ausgestrahlten Lichts sich ein Phasendifferenz-Steuerungsfilm auf der Lichtführung befindet.

2. Optische Aufnehmervorrichtung nach Anspruch 1,
**dadurch gekennzeichnet, daß**
die gesamte zweite Oberfläche der Lichtführung bis auf Lichtreflexionsbereiche und Lichtdurchlaßbereiche mit einem Licht abschirmenden Film beschichtet ist.

3. Optische Aufnehmervorrichtung nach Anspruch 1 und 2,
**dadurch gekennzeichnet, daß**
das Licht ausstrahlende Element (202) und die Photodetektoreinrichtung (216, 222) von der Lichtführung beabstandet sind.

4. Optische Aufnehmervorrichtung nach Anspruch 3,
**dadurch gekennzeichnet, daß**
diese zudem ein Einfallslicht-Reflexionsbauteil (204) zum Reflektieren des von dem Licht austrahlenden Element (202) ausgestrahlten Lichts zu der Lichtführung (205) umfaßt, um es so in die Lichtführung zu leiten.

5. Optische Aufnehmervorrichtung nach Anspruch 4,
**dadurch gekennzeichnet, daß**
das Licht ausstrahlende Element (202) und das Einfallslicht-Reflexionsbauteil (204) auf einem Sensorsubstrat (201) angeordnet sind, auf dem sich die Photodetektoreinrichtung (216, 222) befindet.

6. Optische Aufnehmervorrichtung nach Anspruch 5,
**dadurch gekennzeichnet, daß**
das Einfallslicht-Reflexionsbauteil (204) zum Reflektieren des von dem Licht austrahlenden Element (202) ausgestrahlten Lichts zu der Lichtführung (205) zum Einleiten dessen in die Lichtführung ein trapezoidförmiges Prisma mit einer geneigten Reflexionsoberfläche (204a) umfaßt, die mit einem halbdurchlässigen Film beschichtet ist;
die Vorrichtung zudem einen Lichtmengen-Überwachungssensor (49) umfaßt, der an einem mit einer Grundfläche des Prismas in Berührung stehenden Bereich auf dem Sensorsubstrat (201) ausgebildet ist, wobei ein Teil des von dem Licht austrahlenden Element ausgestrahlten Lichts in das trapezoidförmige Prisma durchgelassen wird, um durch den Lichtmengen-Überwachungssensor eine Lichtmenge zu erfassen.

7. Optische Aufnehmervorrichtung nach einem der Ansprüche 1 bis 6,
**dadurch gekennzeichnet, daß**
die Photodetektoreinrichtung erste und zweite Photodetektoren (216, 222) umfaßt, und zudem durch:
einen sich auf der zweiten Oberfläche befindenden, halbdurchlässigen Abschnitt (213) zum Durchlassen eines Teils des Lichts, das an der optischen Platte reflektiert worden und durch das holographische optische Element hindurchgetreten ist, und zum Reflektieren des verbleibenden Lichts;
einen sich auf der ersten Oberfläche befindenden Reflexionsabschnitt (218) zum Empfangen des verbleibenden, von dem halbdurchlässigen Abschnitt reflektierten Lichts und zum Reflektieren dieses Anteils zu dem zweiten Photodetektor;
wobei ein Brennpunkt des Lichts, das an der optischen Platte reflektiert worden und durch das holographische optische Element hindurchgetreten ist, in einem Strahlengang zwischen dem halbdurchlässigen Abschnitt (213) und dem zweiten Photodetektor (222) liegt; und
wobei der erste und zweite Photodetektor sowohl Fokussierungsfehler und Spurführungsfehler als auch auf der optischen Platte aufgezeichnete Informationen erfassen.

8. Optische Aufnahmervorrichtung nach Anspruch 7,
**dadurch gekennzeichnet, daß**
das Licht ausstrahlende Element (202) dazu vorgesehen ist, linear polarisiertes Licht auszustrahlen;
das zweite holographische Muster (208b) dazu vorgesehen ist, das Licht, das an er optischen Platte reflektiert wurde, in eine Richtung zu beugen, die mit Bezug auf die Polarisationsrichtung des linear polarisierten Lichts um einen Winkel von (2n+1) π/4 geneigt ist, wobei n eine ganze Zahl ist und wobei der halbdurchlässige Abschnitt (213) einen sich auf der zweiten Oberfläche befindenden Polarisationsstrahlteiler umfaßt, um entweder die P-polarisierte Komponente oder der S-polarisierte Komponente des Lichts durchzulassen, das an der optischen Platte reflektiert worden und durch das holographische optische Element hindurchgetreten ist, und um die jeweils andere der P-polarisierten Komponente und der S-polarisierten Komponente zu reflektieren.

9. Optische Aufnehmervorrichtung nach Anspruch 8,
**dadurch gekennzeichnet, daß**
diese zudem ein sich auf der zweiten Oberfläche befindendes Durchlaßfenster (220) umfaßt, um das an dem Reflexionsabschnitt reflektierte Licht zu dem zweiten Photodetektor zu führen.

10. Optische Aufnehmervorrichtung nach Anspruch 9,
**dadurch gekennzeichnet, daß**
der linear polarisierte Strahl des von dem Licht austrahlenden Element ausgestrahlten Lichts bezüglich der zweiten Oberfläche der Lichtführung eine S-polarisierte Komponente ist und der auf der zweiten Oberfläche als Schicht aufgebrachte Polarisationsstrahlteiler-Film und der Polarisationsstrahlteiler die P-polarisierte Komponente durchlassen und die S-polarisierte Komponente reflektieren.

## Revendications

1. Appareil de reproduction optique comprenant:
un élément à émission de lumière (202) pour émettre une lumière polarisée dirigée sur un disque optique (209);
un détecteur photoélectrique (216, 222) pour recevoir la lumière réfléchie à partir dudit disque optique;
un guide optique transparent (205) ayant deux surfaces, une première surface (20ä) en regard dudit disque optique et une deuxième surface (205b) en regard dudit élément à émission de lumière et dudit détecteur photoélectrique, pour guider la lumière émise à partir dudit élément à émission de lumière sur ledit disque optique, et également pour guider la lumière réfléchie à partir du disque optique vers ledit détecteur photoélectrique; et
une première configuration d'hologramme (208a) pour faire converger la lumière émise à partir de l'élément à émission de lumière sur le disque optique et une deuxième configuration d'hologramme (208b) pour diffracter la lumière réfléchie par le disque optique vers le ledit détecteur photoélectrique; caractérisé en ce que:
lesdites première et deuxième configurations d'hologramme sont superposés pour former un élément optique holographique composé (208), disposé sur ladite première surface; en ce que :
ladite deuxième configuration d'hologramme est également conçue pour changer la lumière réfléchie par le disque optique en lumière de focalisation, et en ce que
un film de commande de différence de phase est disposé sur ledit guide optique, pour commander une différence de phase entre les composantes polarisées de la lumière émise à partir dudit élément à émission de lumière.

2. Appareil de reproduction optique selon la revendication 1, dans lequel toute la deuxième surface du guide optique excepté les régions de transmission et de réflexion de la lumière, est revêtue d'un film de protection à la lumière.

3. Appareil de reproduction optique selon la revendication 1 et 2, dans lequel ledit élément à émission de lumière (202) et le détecteur photoélectrique (216, 222) sont espacés dudit guide optique.

4. Appareil de reproduction optique selon la revendication 3, comportant en outre un élément de réflexion de la lumière incidente (204) pour réfléchir la lumière émise à partir dudit élément à émission de lumière (202) vers ledit guide optique (205) de façon à la conduire dans le guide optique.

5. Appareil de reproduction optique selon la revendication 4, dans lequel ledit élément à émission de lumière (202) et ledit élément de réflexion de la lumière incidente (204) sont disposés sur un substrat de capteur (201) sur lequel ledit détecteur photoélectrique (216, 222) est placé.

6. Appareil de reproduction optique selon la revendication 5, dans lequel ledit élément de réflexion de la lumière incidente (204) comprend un prisme trapézoïdal ayant une surface de réflexion inclinée (204a) sur laquelle le film à semi-transmission est déposé, pour réfléchir la lumière émise à partir dudit élément à émission de lumière (202) vers ledit guide optique (205) afin de la conduire dans le guide optique;
l'appareil comportant en outre un capteur de surveillance de quantité de lumière (4a) formé sur ledit substrat de capteur (201) au niveau d'une région avec laquelle un fond dudit prisme entre en contact, transmettant de ce fait une partie de la lumière émise à partir dudit élément à émission de lumière dans ledit prisme trapézoïdal pour détecter la quantité de lumière par ledit capteur de surveillance de quantité de lumière.

7. Appareil de reproduction optique selon l'une quelconque des revendications 1 à 6, dans lequel:
ledit détecteur photoélectrique comprend des premier et deuxième détecteurs photoélectriques (216, 222) et comprend en outre:
une partie de semi-transmission (213), disposée sur ladite deuxième surface, pour transmettre une partie de la lumière ayant été réfléchie au niveau du disque optique et ayant passée par ledit élément optique holographique, et pour réfléchir le reste de ladite lumière;
une partie de réflexion (218), disposée sur ladite première surface, pour recevoir ledit reste de ladite lumière réfléchie par ladite partie à semi-transmission et la réfléchir vers ledit deuxième détecteur photoélectrique;
un point focal de ladite lumière ayant été réfléchie au niveau du disque optique et passée par ledit élément optique holographique se trouvant sur un trajet optique entre ladite partie à semi-transmission (213) et ledit deuxième détecteur photoélectrique (222); et
lesdits premier et deuxième détecteurs photoélectrique détectant l'erreur de mise au point et l'erreur de suivi de piste de même que des informations enregistrée sur le disque optique.

8. Appareil de reproduction optique selon la revendication 7, dans lequel:
ledit élément à émission de lumière (202) est conçu pour émettre une lumière linéairement polarisée;
ladite deuxième configuration d'hologramme(208b) est conçue pour diffracter la lumière ayant été réfléchie au niveau du disque optique dans une direction inclinée d'un angle de (2n+1)π/4, dans laquelle n est un nombre entier, par rapport à une direction de polarisation de ladite lumière linéairement polarisée, et dans lequel ladite partie à semi-transmission (213) comprend un séparateur de faisceau de polarisation, disposé sur ladite deuxième surface, pour transmettre l'une ou l'autre de la composante polarisée S et de la composante polarisée P de la lumière ayant été réfléchie au niveau du disque optique et ayant passée par ledit élément optique holographique et pour réfléchir l'autre composante desdites composante polarisée S et composante polarisée P.

9. Appareil de reproduction optique selon la revendication 8, comportant en outre:
une fenêtre de transmission (220), ménagée sur ladite deuxième surface, pour guider ladite lumière réfléchie au niveau de ladite partie de réflexion vers ledit deuxième détecteur photoélectrique.

10. Appareil de reproduction optique selon la revendication 9, dans lequel le faisceau linéairement polarisé de ladite lumière émise à partir dudit élément à émission de lumière est une composante polarisée S par rapport à la deuxième surface dudit guide optique, et ledit film de séparation de faisceau polarisé déposé sur ladite deuxième surface et ledit séparateur de faisceau polarisé transmettent la composante polarisée P et réfléchissent la composante polarisée S.
